# EUROPEAN PATENT APPLICATION

(11) **EP 4 495 633 A1**
(43) Date of publication of application: **22.01.2025**
(21) Application number: 23186572.6
(22) Date of filing: 20.07.2023
(51) Int. Cl.: G01S 19/01, G06N 20/00, H04K 3/00, G01S 19/21

(54) **METHOD FOR ESTIMATING JAMMING IN A GLOBAL NAVIGATION SATELLITE SYSTEM RECEIVER**

(71) Applicant: u-blox AG, 8800 Thalwil (CH)
(72) Inventor: Vonlanthen, Manuel, 8800 Thalwil (CH); Kallio, Veera, 8800 Thalwil (CH); Afisiadis, Orion, 8800 Thalwil (CH); Lemieux, Berthier, 8800 Thalwil (CH); Hartmeier, Thomas, 8800 Thalwil (CH)
(74) Representative: Epping - Hermann - Fischer

(57) **Abstract**

A method for estimating jamming in a global navigation satellite system, GNSS, receiver is provided. The method is performed in the receiver and comprises receiving GNSS signals at a radio frequency band and processing the received signals at an intermediate frequency band; collecting a set of parameters at the receiver based on the received GNSS signals; and obtaining a likelihood value using a machine learning model trained for the receiver, wherein the set of parameters are inputs to the machine learning model, the likelihood value is an output of the machine learning model, and the likelihood value is a number between 0 and 1 and corresponds to a likelihood of the receiver being jammed in the intermediate frequency band.

## Description

### TECHNICAL FIELD

This disclosure relates to a method for estimating jamming in a global navigation satellite system receiver and to a method for training a machine learning model for estimating the jamming. The disclosure further relates to a device comprising a global navigation satellite system receiving unit and a processing unit.

### BACKGROUND ART

Global navigation satellite systems, GNSSs, have been widely used for obtaining positioning and timing information, which can be further used for various applications such as navigation, tracking, remote control, etc. In a GNSS system, multiple GNSS satellites above the atmosphere of the earth continuously broadcast their GNSS signals at radio frequencies. A device equipped with GNSS receiving functionality may receive GNSS signals from GNSS satellites for further processing.

Accurate positioning information based on GNSS signals is usually desired for various applications. However, jamming appears more and more often and universally nowadays and may severely interfere GNSS signals, as GNSS signals are typically attenuated when they arrive at GNSS receivers. Jamming may occur intentionally or unintentionally, and may be produced by different types of jamming signals, such as continuous wave signals, narrowband signals, broadband signals, etc. Jamming may also occur at different frequencies in the range of GNSS transmission frequencies. During the operation of a GNSS receiver, the GNSS receiver may encounter jamming at any unknown time with any types of jamming signals. The reliability of positioning information based on GNSS signals cannot be guaranteed in the presence of jamming.

It is therefore desired but challenging for a timely and lightweight estimation of jamming so that a GNSS receiver is able to take timely countermeasures when jamming occurs. Such challenge is not well addressed in conventional solutions.

### SUMMARY OF INVENTION

An object to be achieved is to provide an improved concept for estimating jamming in a GNSS receiver in a timely and lightweight manner.

This object is achieved with the subject-matter of the independent claims. Embodiments and developments derive from the dependent claims.

According to the present disclosure, a GNSS receiver is capable of receiving GNSS signals at different radio frequency, RF, bands, down-converting and further processing the GNSS signals at respective intermediate frequency, IF, bands. The receiver may be jammed due to any kind of jamming signals, e.g. transmitted by non-legitimate sources. In this case, the received GNSS signals may be jammed if any jamming signal falls into the range of the RF bands for receiving the GNSS signals.

The improved concept is based on the idea that the receiver collects a set of parameters that reflect information of the received GNSS signals. In particular, the parameters are specifically measured for a RF band and a corresponding IF band for those GNSS signals received and processed at the RF and IF band. The band-specific parameters are input to a machine learning model, e.g. a logistic regression model which is state-less and lightweight, and the machine learning model has been trained specifically for the receiver. The machine learning model outputs a likelihood value indicating a likelihood of the receiver being jammed at a specific RF and IF band.

If the likelihood is considered high, the receiver may perform countermeasures to eliminate the impact of jamming, e.g. by performing jamming mitigation techniques, by stopping receiving GNSS signals from the affected RF band, or by stopping trusting the Position, Velocity and Time, PVT, solution produced based on the jammed GNSS signals, etc.

By means of the band-specific parameters, the jamming estimation is able to indicate whether the RF and IF band being used for the received GNSS signals is affected by jamming, so that the receiver can decide whether to continue using the GNSS signals at the affected band.

As the machine learning model is state-less, jamming can be estimated in a timely manner at the receiver, so that the impact of jamming can be eliminated without delay. The jamming estimation can be performed at any time during the operation of the receiver, even at the start-up of the receiver. The jamming estimation can quickly reflect changes of any existing jamming, and quickly detect newly emerged jamming.

As the machine learning model is lightweight, receivers that have constraint power and computation resources, e.g. embedded GNSS receivers in mobile devices or Internet of Things devices, are able to perform the jamming estimation locally at the receivers.

Furthermore, each machine learning model is trained specifically for a type of receivers, considering that different types of receivers may have different hardware characteristics and firmware and software properties, so that each machine learning model is optimized for a specific type of receivers to achieve a more precise jamming estimation.

According to the present disclosure, the method for estimating jamming in a GNSS receiver comprises that the receiver receives GNSS signals at a RF band and processes the received signals at an IF band corresponding to the RF band, wherein the GNSS signals are transmitted over a carrier frequency at the RF band and the GNSS signals are downconverted to the IF band; the receiver collects a set of parameters at the receiver based on the received GNSS signals; and the receiver obtains a likelihood value using a machine learning model trained for the receiver, wherein the set of parameters are inputs to the machine learning model, the likelihood value is an output of the machine learning model, and the likelihood value is a number between 0 and 1 and corresponds to a likelihood of the receiver being jammed in the intermediate frequency band.

In various implementations of the method, the machine learning model is a logistic regression model. A logistic regression model is state-less and lightweight for a timely estimation of jamming.

In an example implementation of the method, the set of parameters comprises skewness of a RF spectrum at the RF band; gain of a RF amplifier in the receiver; skewness of an IF spectrum at the IF band; variance of an IF spectrum at the IF band; variance of an IF histogram at the IF band; mean of a collapsed modulo-1kHz spectrum at the IF band, wherein the collapsed modulo-1kHz spectrum is chosen from frequency components with modulo-1kHz value in a frequency spectrum around the IF; and number of GNSS signals whose distance tracking and/or velocity tracking is aborted by the receiver due to high correlation with noise. The parameters are measured for the RF and IF band used by the receiver, therefore the jamming estimation can reflect the jamming status for the RF and IF band being used. It has been found that these selected parameters constitute a reasonable and efficient approach according to the improved concept for estimating jamming in a GNSS receiver. However, further parameters could be included.

In some implementations of the method, before the receiver collects the set of parameters, the receiver applies jamming mitigation on the received GNSS signals. In this case, the jamming estimation is performed after the jamming mitigation, and can indicate whether the jamming mitigation effectively eliminates a jamming.

In some implementations, the method further comprises that the receiver determines a threshold, wherein the threshold is a number between 0 and 1; the receiver determines a jamming status to be a status of being jammed when the likelihood value is greater than the threshold, and determines the jamming status to be a status of not being jammed when the likelihood value is smaller than or equal to the threshold. By using the threshold, the receiver can quickly determine and react to the jamming status.

The present disclosure further provides a training method for training a machine learning model according to the improved concept for estimating jamming in a GNSS receiver in a timely and lightweight manner. The trained model can be used in the method for estimating jamming. The training is achieved by a computing device for estimating jamming in a GNSS receiver. The training method comprises that the receiver receives GNSS signals at a plurality of RF bands and processes the received signals at a plurality of respective IF bands, wherein the received GNSS signals comprise GNSS signals being jammed and GNSS signals not being jammed; the receiver logs a set of parameters corresponding to the GNSS signals being jammed and the GNSS signals not being jammed at the respective IF bands; and the computing device trains the machine learning model based on the set of logged parameters and the corresponding GNSS signals at the respective IF bands. By means of the training method, a single machine learning model is obtained for estimating jamming at all IF bands and is optimized for the receiver and receivers of the same receiver type.

In some implementations of the training method, logging the set of parameters comprises that the receiver logs the set of parameters reflecting information of the received GNSS signals within the respective IF bands being jammed or not being jammed.

In an example implementation of the training method, the set of parameters comprises the parameters described above in the method for estimating jamming in a GNSS receiver. In the training method, as the receiver receives GNSS signals at the plurality of RF bands and processes the received signals at the plurality of respective IF bands, the parameters are thus respective measurements at the plurality of RF bands and the plurality of IF bands.

In some implementations of the training method, training the machine learning model comprises that the computing device sets a jamming status of the GNSS signals at the respective intermediate frequency, wherein the jamming status is a status of the GNSS signals being jammed or a status of the GNSS signals not being jammed; and computing device trains the machine learning model based on the logged parameters and the corresponding jamming status of the GNSS signals at the respective intermediate frequency.

In some implementations, the training method further comprises that the computing device simulates jamming signals and applies the simulated jamming signals to at least part of the GNSS signals to be received by the receiver, wherein the simulated jamming signals are different types of signals including continuous wave signals, narrowband signals and broadband signals, the simulated jamming signals have different power levels, different frequencies and different durations.

The present disclosure further provides a device according to the improved concept for estimating jamming in a GNSS receiver in a timely and lightweight manner. The device comprises a GNSS receiving unit and a processing unit. The device is configured to receive GNSS signals at a RF band and process the received signals at an IF band; to collect a set of parameters at the device; and to obtain a likelihood value using a machine learning model trained for the device, wherein the set of parameters are inputs to the machine learning model, the likelihood value is an output of the machine learning model, and the likelihood value is a number between 0 and 1 and corresponds to a likelihood of the device being jammed in the IF band.

In various implementations of the device, the machine learning model is a logistic regression model.

In some implementations of the device, the set of parameters comprises the parameters described above in the method for estimating jamming in a GNSS receiver.

In some implementations, the device is further configured, before collecting the set of parameters, to apply jamming mitigation on the received GNSS signals.

In some implementations, the device is further configured to receive further GNSS signals at a plurality of RF bands and process the further signals at a plurality of IF bands, wherein the further GNSS signals comprise GNSS signals being jammed and GNSS signals not being jammed; and to log a further set of parameters to be used as a training dataset, wherein the further set of parameters corresponds to the further GNSS signals being jammed and not being jammed at respective IF bands.

Further implementations and developments of the device become readily apparent for the skilled reader from the various implementations described above in conjunction with the method for estimating jamming in a GNSS receiver and the training method.

According to one embodiment of the improved concept, a computer program product comprises instructions that may be stored in a preferably non-transitory computer-readable storage medium, the instructions enabling a computer system with one or more processors to execute a method according to one of the implementations described above.

Furthermore, a computer system may have one or more processors and a storage medium having computer program instructions stored therein, enabling the one or more processors to execute a method according to one of the implementations described above.

### BRIEF DESCRIPTION OF DRAWINGS

The improved concept will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows a flowchart of a method for estimating jamming in a GNSS receiver;
- Figure 2: shows an example of a logistic regression model;
- Figure 3: shows an example of likelihood values;
- Figure 4: shows a flowchart of a method for training a machine learning model; and
- Figure 5: shows an example implementation of a device.

### DETAILED DESCRIPTION

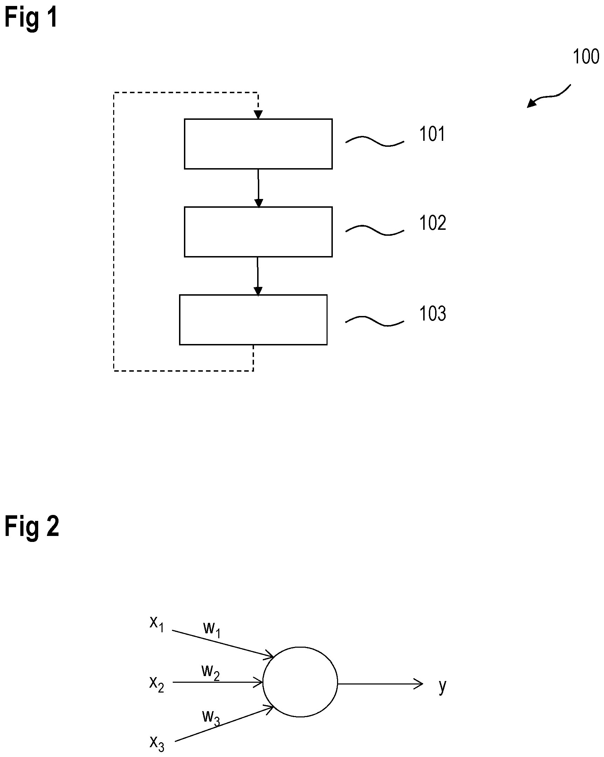

Figure 1 shows a flowchart of an example implementation of method 100 for estimating jamming in a GNSS receiver.

As examples, the receiver can be any kind of an electronic device and/or an electronic module with GNSS receiving and processing capabilities. For example, the receiver may be a terminal device, a computer device, a module embedded in a sensor device, etc. The receiver may have constraint power and computation resources.

The GNSS can be any kind of constellation positioning systems that the receiver is enabled to operate with, such as GPS, GLONASS, BeiDou, Galileo, etc.

In step 101, the receiver receives GNSS signals at a RF band and processes the received signals at an IF band.

For example, GNSS satellites continuously broadcast GNSS signals. When one or more GNSS satellites are visible to the receiver, the receiver can receive GNSS signals from the visible GNSS satellites. Carrier frequencies and correspondent RF bands are designated for transmitting different types of GNSS signals. For example, GPS L1C/A signals use a carrier frequency of 1575.42 MHz, BeiDou B1I signals use a carrier frequency of 1561.098 MHz, etc. The receiver would thus receive different types of GNSS signals at different RF bands centered at their respective carrier frequencies.

It should be apparent that the example implementation of method 100 in Figure 1 shows an example case that the receiver receives one type of GNSS signals using a same carrier frequency. In cases that the receiver receives multiple types of GNSS signals using respective carrier frequencies, method 100 can be performed for each type of GNSS signals using a respective carrier frequency.

Referring back to step 101, after the receiver receives GNSS signals at a RF band centered at a correspondent carrier frequency, the GNSS signals are further processed in a processing chain. For example, the GNSS signals are received by an antenna or an antenna array in the receiver, and may be amplified by a RF amplifier, e.g. a RF programmable gain amplifier, PGA. The amplified GNSS signals at the RF band may be shifted to a correspondent IF band by a down-converter. The IF GNSS signals may be converted into digital signals for further signal processing steps, e.g. acquisition, tracking, navigation processing, etc.

It should be apparent that, in step 101 and the following steps of method 100, the carrier frequency, the RF band and the IF band are corresponding to each other, which belong to the same GNSS signals at different processing steps. For ease of reading, the RF band and the IF band belonging to the same GNSS signals are referred as the in-use RF band and the in-use IF band respectively, and referred together as the in-use band.

When jamming exists, the received GNSS signals may be jammed. For example, when there exist jamming signals at the in-use RF band, the received signals may thus contain original GNSS signals transmitted from GNSS satellites and jamming signals. Along the processing chain, the jamming signals may be further contained in the IF signals at the in-use IF band. In such case, the receiver is being jammed at the in-use IF band. Subsequent signal processing results may not be reliable.

Jamming signals may be various types of unknown signals, e.g. continuous wave, CW, signals, narrowband signals, broadband signals, etc. All types of jamming signals may hinder the acquisition and tracking of GNSS signals from producing reliable navigation results. Jamming signals may have various transmission power levels, various frequencies, or durations.

During the receiving and the processing chain, certain jamming mitigation techniques may be applied. For example, antennas may utilize spatial properties to block certain jamming signals, a notch filter may attenuate unwanted narrowband jamming signals. The following steps of method 100, i.e. steps 102 and 103, may be performed after any jamming mitigation technique is performed. In this case, the jamming estimation could indicate whether the jamming mitigation effectively eliminates a jamming, and whether any residual jamming exists after the jamming mitigation.

In step 102, the receiver collects a set of parameters at the receiver based on the received GNSS signals. As an example implementation, the set of parameters reflect measurements and information that are specific to the in-use band of the received GNSS signals.

For example, the set of parameters may include a measurement of skewness of a RF spectrum at the in-use RF band, a measurement of gain of a RF amplifier being used in the receiver, a measurement of skewness of an IF spectrum at the in-use IF band, a measurement of variance of the IF spectrum at the in-use IF band, and a measurement of variance of an IF histogram at the in-use IF band. Corresponding calculations of skewness and variance of a spectrum and variance of a frequency histogram are known to the skilled person and therefore not described in more detail here.

The set of parameters may further include a mean of a collapsed modulo-1kHz spectrum at the in-use IF band. For calculating this parameter, the frequency components at the in-use IF band of the signals are analyzed. The frequency components with the same modulo 1kHz value are organized in subsets, for example, a subset of all the frequency components starting from 50 Hz with the same modulo 1kHz value would contain the frequency components of 50 Hz, 1050 Hz, 2050 Hz and so on, another subset contains all the frequency components starting from 100 Hz with the same modulo 1kHz value would contain the frequency components of 100 Hz, 1100 Hz, 2100 Hz and so on. For each subset, the frequency component with the maximum energy is found. The found frequency components with the maximum energy in each subset are then chosen to build a collapsed spectrum. The parameter is the mean of the collapsed spectrum.

The parameter of the mean of the collapsed spectrum particularly reflects information about possible CW jamming signals. If any mitigation technique is applied targeting at mitigating CW jamming signals, e.g. by a time-domain filtering, the parameter provides information about any residual CW jamming signals.

The set of parameters may further include a number of GNSS signals whose tracking is aborted by the receiver due to high correlation with noise. For example, for GNSS ranging, the receiver performs distance tracking and/or velocity tracking based on the received GNSS signals. In the recent past, e.g., during an interval of collecting the parameters, the number of GNSS signals whose distance tracking and/or velocity tracking was aborted due to high correlation with noise is collected. The parameter can also reflect information about possible CW jamming signals.

Several of the above listed parameters are produced with respect to the in-use band of the received GNSS signals. In this way, the collected set of parameters are specific to the in-use band. As an example implementation of method 100, it is possible that further parameters may be collected at the receiver and to be used together with the above listed parameters.

In step 103, the receiver inputs the set of parameters to a machine learning model and obtains a likelihood value output from the machine learning model. The likelihood value is a number between 0 and 1 and corresponds to a likelihood of the receiver being jammed at the in-use IF band.

As an example implementation, the machine learning model is a logistic regression model. A logistic regression model typically takes input variables and gives probability of a binary outcome. Figure 2 shows an example of a logistic regression model. In the example model, x₁, x₂ and x₃ are three inputs to the model; w₁, w₂ and w₃ are the weights of the model, each weight corresponds to a respective input; y is the output of the model. When using the model, the weights have been trained so that the output y can be calculated from the inputs and the weights.

Referring back to step 103, the inputs of the machine learning model are the parameters listed above in step 102. For example, when a logistic regression model as shown in Figure 2 is used as the machine learning model, as there are seven parameters listed above in step 102, the seven parameters could thus be x₁ to x₇ to be input to the logistic regression model. The logistic regression model has been trained, so that each input parameter has a trained weight, i.e. being one of w₁ to w₇, for calculating the output. The output of the machine learning model, e.g. y in Figure 2, is a likelihood value, or in other words, a probability number between 0 and 1, which indicates a probability of being one of two jamming statuses.

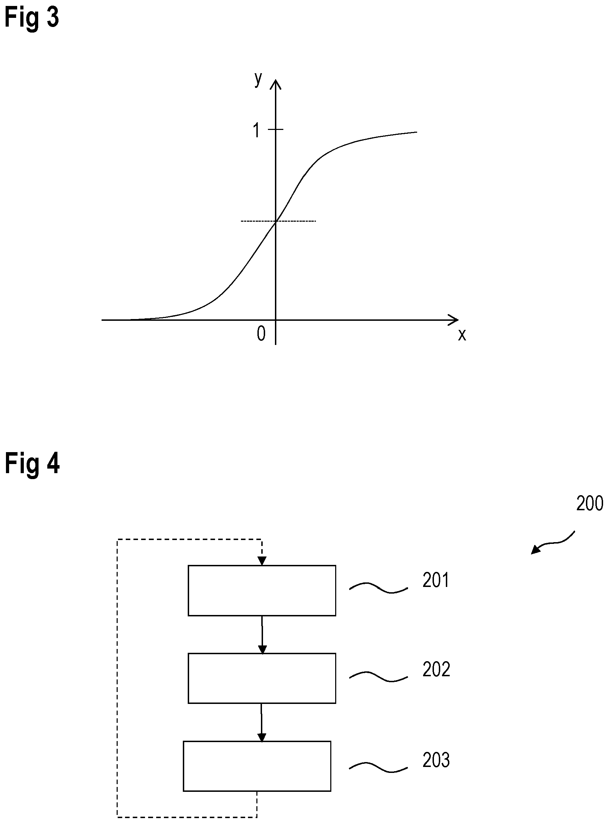

Figure 3 shows an example of likelihood values that could be output from the machine learning model. Axis x shows input values of the machine learning model, which could be a vector that contains a set of input parameters, such as the parameters listed above in step 102. Axis y shows output values of the machine learning model. All possible output values locate in the range of 0 to 1, wherein the two numbers of 0 and 1 are the lower and upper boundaries of the output values. The two boundary numbers 0 and 1 are pre-designated to represent two jamming statuses respectively. For example, number 0 may be designated to represent the status of not being jammed and number 1 may be designated to represent the status of being jammed. An opposite representation is also possible, namely, number 0 for the status of being jammed and number 1 for the status of not being jammed. No matter which representation is used, it should be used consistently throughout the training and the application of the machine learning model.

In the following, the representation of number 0 for the status of not being jammed and number 1 for the status of being jammed is used for method 100 as an example. In this case, in step 103, output values closer to 0 indicates a higher likelihood or a higher probability that the receiver is not jammed in the in-use IF band, and vice versa, output values closer to 1 indicates a higher likelihood or a higher probability that the receiver is jammed in the in-use IF band.

After the receiver obtains a likelihood value from the output of the machine learning model in step 103, the likelihood value may be used directly as an estimation of jamming in the receiver. In an example implementation of method 100, the receiver may further determine the jamming status based on the likelihood value and a pre-determined threshold. The threshold is a number between 0 and 1 and can be pre-determined for the receiver by a user. As shown in Figure 3, the dotted line is located at the example threshold, e.g. at 0.5. Given the threshold, the receiver can determine that the jamming status is the status of being jammed, when a likelihood value is greater than the threshold and as number 1 represents the status of being jammed. Vice versa, the receiver can determine that the jamming status is the status of not being jammed, when a likelihood value is smaller than or equal to the threshold and as number 0 represents the status of not being jammed. By using the threshold, the jamming status is directly indicated, so that the jamming estimation result is an indication of the jamming status.

When the jamming status is indicated as being jammed, it can be interpreted as that, jamming may exist in the in-use IF band, and may exist in the correspondent in-use RF band. The in-use RF band may be assumed not reliable to be further used. If jamming mitigation is performed in the receiving and processing chain of the received GNSS signals while the jamming status is still indicated as being jammed in the in-use IF band, it can be interpreted as that residual jamming may exist in the in-use IF band.

Method 100 can be performed continuously, such that the method starts over with step 101 by receiving further GNSS signals.

Steps 102 and 103 may be performed periodically with a certain interval, such that the set of parameters listed above in step 102 are measured and collected based on the GNSS signals received in the previous interval, and the estimation and the indication are calculated based on the collected parameters in the previous interval. The interval may be determined as required or as allowed by the receiver. The interval may depend on how much time is needed for measuring and collecting the parameters. For example, the estimation may be performed a few times per second.

Figure 4 shows a flowchart of method 200 for training a machine learning model. The training method 200 is performed by a computer device. The computer device collects training data from at least a GNSS receiver in a set of GNSS receivers of the same receiver type, so that the trained machine learning model is specifically optimized for the receiver and receivers of the same receiver type. The trained machine learning model can be used by the receiver and receivers of the same receiver type for estimating jamming by performing method 100 to achieve optimal estimation of jamming.

For training the machine learning model, a large training dataset is prepared. The training dataset comprises jammed and unjammed GNSS signals at a plurality of RF bands. For example, the GNSS signals may be different types of GNSS signals at different RF bands centered at their respective carrier frequencies. A simulator may be used to simulate jammed and unjammed GNSS signals. As another example, a simulator may be used to simulate different types of GNSS signals and simulate different kinds of jamming signals. The simulated jamming signals are added to part of the simulated GNSS signals. The rest part of the simulated GNSS signals are not jammed.

The simulated jamming may include different types of jamming signals including continuous wave signals, narrowband signals and broadband signals; the simulated jamming signals may have different power levels, different frequencies and different durations.

In the training dataset, information about the GNSS signals is included together with the GNSS signals. Information may include the in-use RF band and the in-use IF band of each GNSS signal, and the jamming status of the signal in its in-use band. For example, when number 0 is designated for the status of not being jammed and number 1 is designated for the status of being jammed, number 0 may be included in the information of a GNSS signal when the signal is not jammed and number 1 may be included in the information of another GNSS signal when the signal is jammed.

In step 201, the receiver receives GNSS signals at a plurality of RF bands and processing by the receiver the received signals at a plurality of respective IF bands, wherein the received GNSS signals comprise GNSS signals being jammed and GNSS signals not being jammed. For example, a training dataset as described above is prepared, and the receiver receives GNSS signals contained in the training dataset. At each period of time, a same type of GNSS signals at the same RF band centered at the correspondent carrier frequency are sent to the receiver, in order to get measurements for the signals in the same in-use band.

In step 202, the receiver logs a set of parameters corresponding to the GNSS signals being jammed and the GNSS signals not being jammed at the respective IF bands. The set of parameters are those to be used in the machine learning model to be trained and to be used for estimating jamming. For example, the set of parameters may be the parameters listed above in step 102 of method 100. In this case, the same parameters are used in method 100 when the receiver estimates jamming using the trained machine learning model. At each period of time, the parameters are collected for a same type of GNSS signals at the same in-use band, and after the receiver performs steps 201 and 202 for different types of GNSS signals in the training dataset, the set of parameters for a plurality of IF bands are obtained. The set of parameters are further included in the information about the GNSS signals in the training dataset, so that the information includes the in-use band, the jamming status and the parameters logged at the receiver of each GNSS signal.

As an example implementation, more than one receiver in a set of GNSS receivers of the same receiver type can be used to perform steps 201 and 202 to build the single training dataset.

In step 203, the computing device trains the machine learning model based on the set of logged parameters and the corresponding GNSS signals at the respective IF bands. For example, all the information including the in-use band, the jamming status and the parameters logged at the receiver of each GNSS signal are provided for the training, wherein the logged parameters for each GNSS signal are inputs of the machine learning model and the jamming status of the correspondent GNSS signal at its in-use IF band is the expected output of the machine learning model.

A single machine learning model is trained based on all the information for all the GNSS signals in the training dataset, so that the single machine learning model can be used to estimate and indicate jamming status of respective in-use bands. Furthermore, as receivers of a same receiver type share similar configurations and characteristics, the single machine learning model can be used by the receiver logging the set of parameters as well as used by all receivers of the same receiver type for achieving an optimal estimation of jamming.

As an example implementation, the machine learning model to be trained is a logistic regression model as described in method 100.

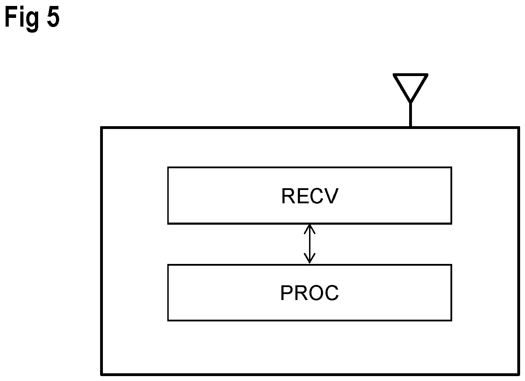

Figure 5 shows an example implementation of a device comprising a GNSS receiving unit RECV, and a processing unit PROC and an antenna or an antenna array. As example implementations, the device may be a standalone electronic device such as a GNSS positioning and navigation device, or may be a mobile terminal device that comprises RECV and PROC for GNSS related applications, or may be an electronic module embedded in a sensor device to provide GNSS related information for the sensor device, etc.

The device is configured to carry out the steps performed by the GNSS receiver according to one of the implementations of method 100. The device may be further configured to carry out the steps performed by the GNSS receiver according to one of the implementations of method 200.

Hence, with the various implementations described above for the improved concept, the receiver obtains indications of the jamming status in the in-use specific band, the machine learning model is optimally trained for the receiver and no past states are needed, therefore, the jamming estimation jamming in the receiver can be performed in a timely and lightweight manner.

Various embodiments of the improved processing concept can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 100, 200: methods
- 101-103, 201-203: steps
- x, x₁, x₂, x₃,: input variables
- w₁, w₂, w₃,: weights
- y: output variable
- RECV: receiving unit
- PROC: processing unit

## Claims

1. A method for estimating jamming in a global navigation satellite system, GNSS, receiver, the method being performed in the receiver and comprising:
- receiving GNSS signals at a radio frequency band and processing the received signals at an intermediate frequency band;
- collecting a set of parameters at the receiver based on the received GNSS signals; and
- obtaining a likelihood value using a machine learning model trained for the receiver, wherein the set of parameters are inputs to the machine learning model, the likelihood value is an output of the machine learning model, and the likelihood value is a number between 0 and 1 and corresponds to a likelihood of the receiver being jammed in the intermediate frequency band.

2. The method according to claim 1, wherein the machine learning model is a logistic regression model.

3. The method according to claim 1 or 2, wherein the set of parameters comprises:
- skewness of a radio frequency spectrum at the radio frequency band;
- gain of a radio frequency amplifier in the receiver;
- skewness of an intermediate frequency spectrum at the intermediate frequency band;
- variance of an intermediate frequency spectrum at the intermediate frequency band;
- variance of an intermediate frequency histogram at the intermediate frequency band;
- mean of a collapsed modulo-1kHz spectrum at the intermediate frequency band, wherein the collapsed modulo-1kHz spectrum is chosen from frequency components with modulo-1kHz value in a frequency spectrum around the intermediate frequency; and
- number of GNSS signals whose tracking is aborted by the receiver due to high correlation with noise.

4. The method according to one of claims 1 to 3, wherein the method further comprises, before collecting the set of parameters, applying jamming mitigation on the received GNSS signals.

5. The method according to one of claims 1 to 4, further comprising:
- determining a threshold, wherein the threshold is a number between 0 and 1;
- determining a jamming status to be a status of being jammed when the likelihood value is greater than the threshold; and
- determining the jamming status to be a status of not being jammed when the likelihood value is smaller than or equal to the threshold.

6. A method for training a machine learning model by a computing device for estimating jamming in a global navigation satellite system, GNSS, receiver, the method comprising:
- receiving by the receiver GNSS signals at a plurality of radio frequency bands and processing by the receiver the received signals at a plurality of respective intermediate frequency bands, wherein the received GNSS signals comprise GNSS signals being jammed and GNSS signals not being jammed;
- logging by the receiver a set of parameters corresponding to the GNSS signals being jammed and the GNSS signals not being jammed at the respective intermediate frequency bands; and
- training by the computing device the machine learning model based on the set of logged parameters and the corresponding GNSS signals at the respective intermediate frequency bands.

7. The method according to claim 6, wherein logging a set of parameters comprises logging by the receiver the set of parameters reflecting information of the received GNSS signals within the respective intermediate frequency bands being jammed or not being jammed.

8. The method according to claim 6 or 7, wherein the set of parameters comprise:
- skewness of radio frequency spectrums at the plurality of radio frequency bands;
- gain of a radio frequency amplifier in the receiver;
- skewness of intermediate frequency spectrums at the plurality of intermediate frequency bands;
- variance of intermediate frequency spectrums at the plurality of intermediate frequency bands;
- variance of intermediate frequency histograms at the plurality of intermediate frequency bands;
- mean of collapsed modulo-1kHz spectrums at the plurality of intermediate frequency bands, wherein the collapsed modulo-1kHz spectrum is chosen from frequency components with modulo-1kHz value in a frequency spectrum at the intermediate frequency; and
- number of GNSS channels of which tracking is aborted by the receiver due to high correlation with noises.

9. The method according to one of claims 6 to 8, wherein training the machine learning model comprises:
- setting a jamming status of the GNSS signals at the respective intermediate frequency, wherein the jamming status is a status of the GNSS signals being jammed or a status of the GNSS signals not being jammed; and
- training the machine learning model based on the logged parameters and the corresponding jamming status of the GNSS signals at the respective intermediate frequency.

10. The method according to one of claims 6 to 9, further comprising:
- simulating jamming signals by the computing device; and
- applying the simulated jamming signals to at least part of the GNSS signals to be received by the receiver;
wherein the simulated jamming signals:
- are different types of signals including continuous wave signals, narrowband signals and broadband signals;
- have different power levels;
- have different frequencies; and
- have different durations.

11. A device comprising a global navigation satellite system, GNSS, receiving unit and a processing unit, the device being configured to:
- receive GNSS signals at a radio frequency band and process the received signals at an intermediate frequency band;
- collect a set of parameters at the device; and
- obtain a likelihood value using a machine learning model trained for the device, wherein the set of parameters are inputs to the machine learning model, the likelihood value is an output of the machine learning model, and the likelihood value is a number between 0 and 1 and corresponds to a likelihood of the device being jammed in the intermediate frequency band.

12. The device according to claim 11, wherein the machine learning model is a logistic regression model.

13. The device according to claim 11 or 12, wherein the set of parameters comprise:
- skewness of a radio frequency spectrum at the radio frequency band;
- gain of a radio frequency amplifier in the device;
- skewness of an intermediate frequency spectrum at the intermediate frequency band;
- variance of an intermediate frequency spectrum at the intermediate frequency band;
- variance of an intermediate frequency histogram at the intermediate frequency band;
- mean of a collapsed modulo-1kHz spectrum at the intermediate frequency band, wherein the collapsed modulo-1kHz spectrum is chosen from frequency components with modulo-1kHz value in a frequency spectrum at the intermediate frequency; and
- number of GNSS signals whose tracking is aborted by the device due to high correlation with noise.

14. The device according to one of claims 11 to 13, wherein the device is further configured, before collecting the set of parameters, to apply jamming mitigation on the received GNSS signals.

15. The device according to one of claims 11 to 14 further configured to:
- receive further GNSS signals at a plurality of radio frequency bands and process the further signals at a plurality of intermediate frequency bands, wherein the further GNSS signals comprise GNSS signals being jammed and GNSS signals not being jammed; and
- log a further set of parameters for training the machine learning model, wherein the further set of parameters corresponds to the further GNSS signals being jammed and not being jammed at respective intermediate frequency bands.
